# EUROPÄISCHE PATENTSCHRIFT

(11) **EP 3 104 058 B1**
(45) Veröffentlichungstag und Bekanntmachung des Hinweises auf die Patenterteilung: **17.07.2019**
(21) Anmeldenummer: 16173112.0
(22) Anmeldetag: 06.06.2016
(51) Int. Cl.: F16L 59/14, B32B 5/18, B32B 7/12, B32B 27/28, B32B 27/36, B32B 27/40, B32B 1/08

(54) **DOPPELWANDIGES LEITUNGSROHR MIT EINER WÄRMEDÄMMSCHICHT SOWIE EIN HIERFÜR BESTIMMTES KUNSTSTOFFAUSSENROHR**
DOUBLE-WALLED CONDUIT HAVING A HEAT-INSULATING LAYER AND A PLASTIC OUTER TUBE FOR USE WITH SAME
TUBE DE CONDUITE À DOUBLE PAROI AVEC UNE COUCHE D'ISOLATION THERMIQUE ET TUBE EXTERNE EN MATIÈRE PLASTIQUE CONÇU POUR CELUI-CI

(30) Priorität: 11.06.2015 DE 102015109313
(43) Veröffentlichungstag der Anmeldung: 14.12.2016
(73) Patentinhaber: Brugg Rohr AG Holding, 5200 Brugg (CH)
(72) Erfinder: HOMANN, Jörn, 30655 Hannover (DE); Peters, Stephan, 31535 Wunstorf (DE)
(74) Vertreter: Scheffler, Jörg

(56) Entgegenhaltungen:
- EP-A1- 0 084 088
- EP-A1- 0 754 897
- EP-A1- 1 288 558
- EP-A1- 1 471 299
- US-A1- 2008 128 042

## Beschreibung

Die Erfindung betrifft ein doppelwandiges Leitungsrohr mit einem medienführenden Innenrohr, einem Kunststoffaußenrohr und einer Gaspermeationssperrschicht, wobei in einem Ringspalt zwischen dem Innenrohr und dem Kunststoffaußenrohr eine thermische Wärmedämmschicht angeordnet ist und das Kunststoffaußenrohr als einen wesentlichen Materialanteil Polyethylen und/oder eine Polyethylenschicht aufweist, wobei die Gaspermeationssperrschicht als einen wesentlichen Materialanteil Polyethylenterephthalat (PET) aufweist..

Derartige doppelwandige Leitungsrohre finden beispielsweise bei Fernwärmeleitungen Verwendung. Der Durchmesser des Kunststoffaußenrohres liegt dabei im Allgemeinen zwischen 75 mm und 1.200 mm, wobei auch größere Durchmesser möglich sind.

Die Leitungsrohre bestehen aus einem im Gebrauch medienführenden Innenrohr, meist aus Stahl, wobei jedoch auch andere Werkstoffe einsetzbar sind. Das Mediumrohr wird zur Wärmedämmung von einer der Isolierung dienenden Wärmedämmschicht umgeben, bei der es sich in der Regel um einen Hartschaum handelt. Den äußeren Abschluss bildet ein Kunststoffaußenrohr, das einen mechanischen Schutzmantel darstellt und häufig aus Polyethylen besteht.

Der Haftverbund eines derartigen Sandwichsystems ist für die Rohrstatik bei erdverlegten, warmgehenden Leitungen von großer Bedeutung, da alle thermischen Kräfte kraftschlüssig übertragen werden. Insbesondere ist es hierbei von Bedeutung, dass die zur Wärmedämmung vorgesehene Isolierung über einen langen Zeitraum vollständig ihre Funktion erfüllt.

In der Praxis hat sich jedoch gezeigt, dass solche Wärmedämmschichten, insbesondere Hartschaumisolierungen, speziell aus Polyurethanschaum vor allem bei hohen Medientemperaturen oberhalb von ca. 120 °C einem zunehmenden Alterungsprozess unterliegen. Dadurch verschlechtert sich nicht nur der Wärmedämmwert, sondern auch der mechanische Haftverbund.

Das Alterungsverhalten wird vor allem auf die durch das Kunststoffaußenrohr eindringenden Gase, insbesondere Sauerstoff, zurückgeführt. Durch den eindringenden Sauerstoff entstehen innerhalb der Isolierung Oxidationsprozesse, die zu einer Eigenschaftsverschlechterung der Isolierung führen. Das in den Poren gebundene CO₂ diffundiert nach außen und wird durch Stickstoff aus der Atmosphäre ersetzt, was wiederum zu einer Verschlechterung der Dämmwirkung führt.

Die vorstehend erwähnten Probleme treten insbesondere bei den als Isolierung verwendeten PUR-Hartschäumen auf. Der oxidative Abbau führt zu einer Zerstörung der "Zellfenster" im PUR-Schaum. Daraus resultiert ein Abbau der Druckfestigkeit und der Scherbelastungsmöglichkeit des Schaumes bis hin zum mechanischen Versagen des Systems.

Aus der WO 2004/003423 A1 ist ein isoliertes Rohr mit einem oder mehreren Innenrohren und einem Isolationsschaum, der das Innenrohr umgibt, bekannt. Das Rohr weist eine diffusionsregulierende Schicht auf, die auf die Außenseite des Schaumes aufgebracht ist. Des Weiteren kann das Rohr ein Außenrohr aus einem haltbaren Material, vorzugsweise Polyethylen, besitzen. Die diffusionsregulierende Schicht kann zwischen dem Polyethylen-Außenrohr und dem Polyurethanschaum oder auf der Außenseite des Polyethylen-Außenrohres angeordnet sein.

Wenn die diffusionsregulierende Schicht auf der Außenseite des Außenrohres angeordnet ist, besteht die Gefahr, dass die Schicht durch mechanische Einwirkungen beschädigt bzw. zerstört wird. Die Anordnung der diffusionsregulierenden Schicht zwischen dem Außenrohr und dem Polyurethanschaum bringt ebenfalls Nachteile mit sich, weil während der Herstellung des Rohres beim manuellen oder maschinellen Einfädeln des Innenrohres in das Außenrohr das Innenrohr (Stahlrohr) beziehungsweise der das Innenrohr führende Abstandshalter mit der diffusionsregulierenden Schicht in Kontakt tritt und diese beschädigen bzw. zerstören kann, wenn die diffusionsregulierende Schicht nur sehr dünn und mechanisch verletzbar ausgeführt ist.

Es sind auch bereits Leitungsrohre mit einem Edelstahlrohr als Mediumrohr, einer Dämmschicht aus einem Polyisocyanurat-Schaum (PIR), einer Gaspermeationssperrschicht sowie einem Mantel aus Polyethylen geringer Dichte (PE-LD) bekannt.

Die DE 20 2010 018 026 U1 betrifft ein Kunststoffaußenrohr für ein Kunststoffmantelrohr, das ein Mediumrohr, insbesondere aus Stahl, ein als mechanischer Schutzmantel dienendes Kunststoffaußenrohr und eine den Ringspalt zwischen Mediumrohr und Außenrohr ausfüllende, zur Wärmedämmung dienende Isolierung aufweist. Das Kunststoffaußenrohr ist dabei als Mehrschichtrohr ausgebildet und weist in seinem Inneren eine in das Außenrohr integrierte, aus einem Kunststoff bestehende Gaspermeationssperrschicht auf, die aus Ethylen-Vinylalkohol-Copolymer (EVOH) besteht. Benachbart zur Gaspermeationssperrschicht sind eine innere und eine äußere Haftvermittlerschicht vorgesehen. Das Kunststoffaußenrohr setzt sich aus einer inneren Polyethylenschicht, einer hierzu benachbarten inneren Haftvermittlerschicht der Gaspermeationssperrschicht aus EVOH, einer benachbart hierzu angeordneten äußeren Haftvermittlerschicht und einer äußeren Polyethylenschicht zusammen. Die Gasdiffusionssperrschicht besitzt eine Dicke von 100 µm, während das gesamte Kunststoffaußenrohr eine Dicke von 3 mm hat.

Es sind auch bereits flexible Verbundrohre von Fernwärmeleitungen bekannt geworden, die beispielsweise aus einem inneren und einem äußeren Wellrohr mit dazwischen angeordneter PUR-Schaum-Wärmedämmung aufgebaut und auf Trommeln aufwickelbar sind.

Es ist somit bereits bekannt, bei derartigen Leitungsrohren bzw. Kunststoffaußenrohren eine Gaspermeationssperrschicht vorzusehen, um zu verhindern, dass die Außenatmosphäre, insbesondere Sauerstoff, mit der inneren Schaumschicht in Kontakt tritt und deren Alterung bewirkt bzw. beschleunigt.

Aus der EP 1 471 299 A1 ist ein wärmeisoliertes Leitungsrohr mit zumindest einem Innenrohr, einer Wärmedämmschicht sowie einem Außenmantel aus thermoplastischem Kunststoff bekannt, bei welchem Leitungsrohr zwischen der Wärmedämmschicht und dem Außenmantel eine thermoformbare Kunststofffolie vorgesehen ist. Die Kunststofffolie weist eine Kernlage, beispielsweise aus Polyethylenterephthalat mit einer Materialstärke von 14 µm, sowie zwei Randlagen auf, die durch Haftvermittlerlagen verbunden sind.

Der Einsatz von Polyethylenterephthalat als Material für Gaspermeationssperrschichten in Mehrschichtrohranordnungen ist auch aus der EP 0 569 681 A1, der EP 0 836 042 A1 sowie der US 2008/0128042 A1 bekannt.

Die EP 0 754 897 A1 offenbart ein doppelwandiges Leitungsrohr mit einem medienführenden Innenrohr, beispielsweise aus PET, einem Kunststoffaußenrohr und einer Zwischenschicht als Barriere- oder Haftvermittlerschicht.

Die EP 1 288 558 A1 beschreibt ein doppelwandiges Leitungsrohr mit einem medienführenden Innenrohr, einem Kunststoffaußenrohr aus einem aufextrudierten thermoplastischen Kunststoff und einer Diffusionssperrschicht, beispielsweise eine Verbundfolie aus PET, wobei in einem Ringspalt zwischen dem Innenrohr und dem Kunststoffaußenrohr eine Wärmedämmschicht angeordnet ist.

Ferner bezieht sich die EP 0 960 723 B1 auf ein Verbundelement, beispielsweise für die Verpackungsindustrie, mit einer Schichtfolge aus Polyethylen, Aluminium und Polyethylenterephthalat und die EP 1 394 457 B1 auf einen Schlauch mit geringer Permeation, der mindestens eine Kältemittelsperrschicht und eine Gummischicht oder eine Harzschicht aufweist, wobei bevorzugt Polyethylenterephthalat als Polyesterharze verwendet wird.

Als nachteilig erweisen sich bei dem Einsatz einer Gaspermeationssperrschicht aus EVOH die damit verbundenen hohen Kosten. Zwar eignet sich grundsätzlich auch das kostengünstig verfügbare PE-LD als Gaspermeationssperrschicht, jedoch ist hiermit eine im Vergleich zum EVOH etwa 3000-fache Materialstärke erforderlich, was in der Praxis zu erheblichen Einschränkungen führt.

Der Erfindung liegt die Aufgabe zugrunde, eine kostengünstige und zugleich hochwirksame Gaspermeationssperrschicht bei einem Leitungsrohr zu schaffen.

Diese Aufgabe wird erfindungsgemäß mit einem Leitungsrohr gemäß den Merkmalen des Anspruches 1 gelöst. Die weitere Ausgestaltung der Erfindung ist den Unteransprüchen zu entnehmen.

Erfindungsgemäß ist also ein Leitungsrohr vorgesehen, bei dem das Kunststoffaußenrohr als ein Mehrschichtrohr mit einer Gaspermeationssperrschicht aus einer kompakten extrudierten Polyethylenterephthalat-Schicht mit einer Materialstärke von 0,8 mm bis 2 mm, insbesondere von 0,8 mm bis 1 mm, ausgeführt ist oder dass die Gaspermeationssperrschicht einen geschlossenzelligen Schaum aus Polyethylenterephthalat mit einer Materialstärke zwischen 10 mm und 100 mm aufweist. Hierdurch gelingt es, den Gasaustausch in der Isolierung eines Kunststoffmantelrohres, insbesondere im Schaumsystem, zu unterbinden bzw. soweit zu reduzieren, dass dessen Eigenschaften über die Lebensdauer des Kunststoffmantelrohres weitgehend erhalten bleiben. Dadurch gelingt es, die Auswirkungen, die eine gealterte Isolierung nach dem Stand der Technik mit sich bringen, wesentlich zu reduzieren. Insbesondere kann eine Verringerung des Wärmedämmwertes vermieden werden. Dabei ist Polyethylenterephthalat (PET) als Material kostengünstig verfügbar und weist im Vergleich zu PE-LD als Gaspermeationssperrschicht eine weitaus geringere Gasdurchlässigkeit auf. Das Eindringen des zur Alterung führenden Sauerstoffes durch das Kunststoffaußenrohr in die Isolierung bzw. das Schaumsystem eines Kunststoffmantelrohres wird somit behindert und hierdurch wird eine weitgehende Vermeidung der Schaumalterung durch die Gasdiffusion bei beinahe gleichbleibender Dämmwirkung erreicht. Die mechanischen Kennwerte des Schaumes werden aufrechterhalten. Der vorhandene Haftverbund wird sichergestellt. Es wird ein geschlossenes permeationsdichtes System geschaffen, sodass dauerhaft höhere Temperaturen möglich sind, ohne die Lebensdauer der Kunststoffmantelrohre zu verkürzen. Zugleich wird der Wärmedämmwert des Leitungsrohres über den Lebensdauerzyklus durch den weitgehend unterbundenen Zellgasaustausch erhalten.

Die vorgesehene Gaspermeationssperrschicht ist auf der Außenseite von einer Materialschicht des Kunststoffaußenrohres umgeben, sodass die Gaspermeationssperrschicht gegenüber Beschädigungen von außen geschützt ist. Insbesondere tritt bei der Herstellung des Kunststoffmantelrohres während der Einführung des Mediumrohres bzw. Innenrohres in das Außenrohr zwar ein Kontakt zwischen Innenrohr beziehungsweise den das Innenrohr führenden Abstandshaltern und der Gaspermeationssperrschicht auf, jedoch ist das Material so verschleißfest, dass keine signifikante Beschädigung auftreten kann.

Indem das Kunststoffaußenrohr als ein Mehrschichtrohr zusammen mit der Gaspermeationssperrschicht beispielsweise im Koextrusionsverfahren hergestellt wird, entsteht eine kompakte PET-Schicht mit einer Materialstärke von vorzugsweise weniger als 2 mm, beispielsweise 0,8 mm bis 1 mm, wobei zwischen dem Kunststoffaußenrohr und der Gaspermeationssperrschicht noch eine Haftvermittlerschicht zwischen dem Kunststoffaußenrohr und der Gaspermeationssperrschicht vorgesehen sein kann.

Wenn die Gaspermeationssperrschicht durch einen geschlossenzelligen Schaum aus PET mit einer Materialstärke zwischen 10 mm und 100 mm gebildet ist, dient in vorteilhafter Weise der geschlossenzellige Schaum aus PET zugleich als eine Wärmedämmschicht. Der Herstellungsprozess wird dadurch wesentlich vereinfacht, wenn die Gaspermeationssperrschicht zugleich als Dämmschicht in dem Ringspalt zwischen dem Kunststoffaußenrohr und dem Innenrohr realisiert ist. Es hat sich gezeigt, dass die Wände der Poren des Schaumes wirksam die Gasdurchlässigkeit derart vermindern, dass diese in der Summe zwischen dem Innenrohr und dem Kunststoffaußenrohr als Gaspermeationssperrschicht wirksam eingesetzt werden können. Als Kunststoffaußenrohr kann somit nahezu jedes für Leitungsrohre geeignete Material verwendet werden, weil eine Beschichtung dabei entfallen kann.

Eine besonders vorteilhafte Ausführungsform der Erfindung wird dabei auch dadurch erreicht, dass die Gaspermeationssperrschicht mit dem Kunststoffaußenrohr mittels zumindest einer Haftvermittlerschicht zu einer Einheit verbunden ist. Indem das Kunststoffaußenrohr gemeinsam mit der Gaspermeationssperrschicht zu einer Baueinheit verbunden ist, gelingt es in besonders vorteilhafter Weise, die weitere Herstellung des doppelwandigen Leitungsrohres zu vereinfachen. Insbesondere wird also die Gaspermeationssperrschicht nicht als separate Schicht oder Folie in den Ringspalt zwischen dem Kunststoffaußenrohr und dem Innenrohr eingebracht, sondern das Leitungsrohr kann durch einfaches Ausschäumen des Ringspaltes fertiggestellt werden, wodurch sich die Herstellungskosten weiter reduzieren lassen. Eine weitere Haftvermittlerschicht sowie eine Verschleißschutzschicht können zwar auf der Innenseite der Gaspermeationssperrschicht verwendet werden, dies ist jedoch bei gewöhnlichen Anwendungen nicht erforderlich.

Die Gaspermeationssperrschicht könnte an dem Kunststoffaußenrohr zwischen zwei Deckschichten geschützt mit diesem unlösbar verbunden angeordnet sein. Besonders vorteilhaft ist es hingegen, wenn die Gaspermeationssperrschicht an einer dem Innenrohr zugewandten Innenseite des Kunststoffaußenrohres angeordnet ist. Aufgrund der hohen mechanischen Belastbarkeit der Gaspermeationssperrschicht aus Polyethylenterephthalat (PET) kann diese problemlos auch als eine Innenwandfläche des so geschaffenen Verbundes aus dem Kunststoffaußenrohr und der Gaspermeationssperrschicht realisiert werden.

Dabei wird das PET durch Zufügen von Hilfsstoffen und Treibmitteln beim Extrusionsprozess in einen zellularen Zustand versetzt, sodass eine weitere Verbesserung der Dämmeigenschaften des Rohrsystems erreicht wird. Die Dichte des zellularen PET liegt hierbei zwischen 60 und 300 kg/m³, vorzugsweise bei 80 kg/m³. Die Geschlossenzelligkeit des zellularen PET ist dabei insbesondere größer als 70 %.

Die Gaspermeationssperrschicht ist im Kunststoffaußenrohr vorzugsweise innen angeordnet. Eine solche Lage wird bevorzugt, um zur Außenseite hin eine ausreichende Materialüberdeckung der Gaspermeationssperrschicht zu erzielen. Das Material der Gaspermeationssperrschicht ist derart stabil und verschleißfest gewählt, dass beim Einfädeln des Innenrohres in das Kunststoffaußenrohr bei der Herstellung des Leitungsrohres nicht die Gefahr besteht, dass das Innenrohr das Kunststoffaußenrohr berührt und auf diese Weise die erzeugte Gaspermeationssperrschicht beschädigen kann. Dies wird erreicht, wenn die Dichte des zellularen PET mindestens 80 kg/m³ mit einer geschlossenen oder kompakten inneren Randschicht beträgt. Eine entsprechende Materialüberdeckung zur Außenseite hin ist vorteilhaft, um eine Beschädigung der Gaspermeationssperrschicht durch äußere Krafteinwirkung zu vermeiden.

Bei einer anderen, ebenfalls besonders praxisgerechten Variante besteht die Wärmedämmschicht aus Polyurethan-Schaum und lässt sich dadurch kostengünstig herstellen. Bevorzugt kommt eine solche Wärmedämmschicht bei einem als Mehrschichtrohr ausgeführten Kunststoffaußenrohr mit einer Gaspermeationssperrschicht aus einer kompakten PET-Schicht mit einer Dicke von mindestens 0,8 mm zum Einsatz.

Zu diesem Zwecke werden vorzugsweise die die Wärmedämmschicht bildenden Komponenten in flüssiger Form zugeführt und erst in dem Ringraum zu dem geschlossenzelligen Schaum aufgeschäumt, wodurch das Herstellungsverfahren weiter vereinfacht werden kann.

Das Kunststoffaußenrohr kann für übliche Anwendungszwecke aus einem PE-Material bestehen. Besonders sinnvoll ist es hingegen, wenn darüber hinaus das Kunststoffaußenrohr zumindest eine äußere Schicht aus Polyethylen mit einer Dichte von mehr als 0,94 g/cm³ und damit in Verbindung mit der Gaspermeationssperrschicht eine sehr geringe Gasdurchlässigkeit aufweist.

Das Kunststoffaußenrohr mit Gaspermeationsschicht kann in einem oder mehreren Schritten extrudiert werden. Vorzugsweise wird das Kunststoffaußenrohr durch Koextrusion sämtlicher Schichten hergestellt. Hierbei findet zweckmäßigerweise ein Rohrkopf mit drei Extrudern Verwendung, welcher die Gasdiffusionssperrschicht, die Haftvermittlerschicht und eine Außenschicht koextrudiert.

Die Erfindung ist nicht auf bestimmte Abmessungen beschränkt. Dennoch haben sich für den Einsatz des Leitungsrohres in Fernwärmenetzen Dimensionierungen als praxisgerecht erwiesen, bei denen das Leitungsrohr einen Durchmesser zwischen 75 mm und 1.200 mm aufweist, sodass insbesondere bei einer durch den geschlossenzelligen PET-Schaum realisierten Gaspermeationssperrschicht eine ausreichende Materialstärke erreicht wird, die sogar die Wirksamkeit einer aus EVOH bestehenden Gaspermeationssperrschicht noch übertrifft.

Um ein für ein Leitungsrohr bestimmtes Kunststoffaußenrohr mit einem wesentlichen Materialanteil aus Polyethylen, insbesondere Polyethylen mit einer Dichte von mehr als 0,94 g/cm³ zu schaffen, ist beispielsweise das Kunststoffaußenrohr als ein Mehrschichtrohr mit einer Gaspermeationssperrschicht aus einer kompakten (extrudierten) Polyethylenterephthalat-Schicht ausgeführt. Zu diesem Zweck wird das Kunststoffaußenrohr als ein Mehrschichtrohr zusammen mit der Gaspermeationssperrschicht beispielsweise im Koextrusionsverfahren hergestellt, sodass eine kompakte PET-Schicht mit einer Materialstärke von vorzugsweise weniger als 2 mm, beispielsweise 0,8 mm bis 1 mm, entsteht. Das so geschaffene Kunststoffaußenrohr eignet sich aufgrund der so erzielbaren geringen Gasdurchlässigkeit für viele Anwendungen bei insbesondere doppelwandigen Rohrleitungen in Verbindung mit nahezu beliebigen Dämmstoffen.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung eines doppelwandigen Leitungsrohres in
- Fig. 1: eine erste Variante mit einem als Mehrschichtrohr ausgeführten Kunststoffaußenrohr;
- Fig. 2: eine zweite Variante mit einer durch einen geschlossenzelligen Schaum gebildeten Gaspermeationssperrschicht.

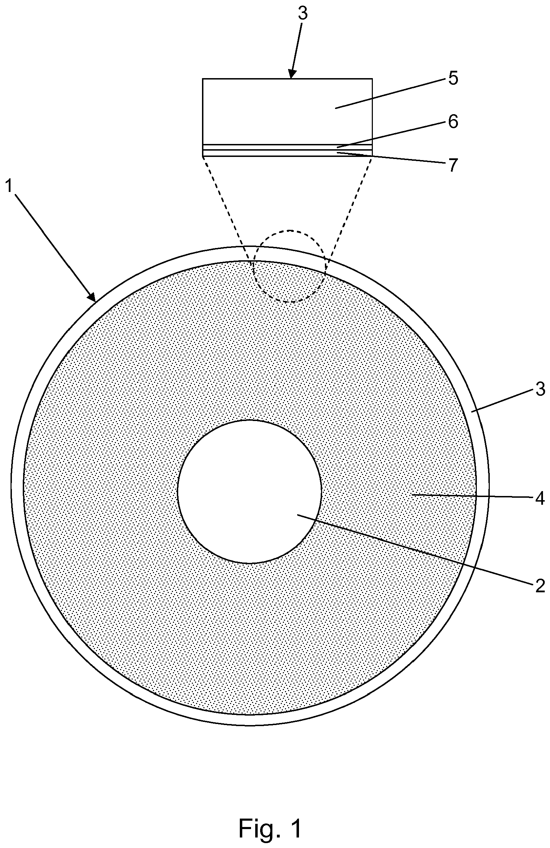

Figur 1 zeigt ein erfindungsgemäßes doppelwandiges Leitungsrohr 1 mit einem medienführenden Innenrohr 2 und einem Kunststoffaußenrohr 3. In einem Ringspalt zwischen dem Innenrohr 2 und dem Kunststoffaußenrohr 3 ist eine thermische Wärmedämmschicht 4 aus Polyurethan-Schaum angeordnet. Dabei ist das Kunststoffaußenrohr 3 als ein Mehrschichtrohr ausgeführt, das eine äußere Schicht 5 aus Polyethylen (PE-HD) mit hoher Dichte und einer Stärke von beispielsweise 3 mm, eine Haftvermittlerschicht 6 mit einer Stärke von ca. 0,01 mm und eine kompakt extrudierte Polyethylenterephthalat-Schicht als Gaspermeationssperrschicht 7 mit einer Materialstärke zwischen 0,8 mm und 1 mm aufweist. Dabei dient die Polyethylenterephthalat-Schicht zugleich als eine hochwirksame und kostengünstig herstellbare Gaspermeationssperrschicht 7.

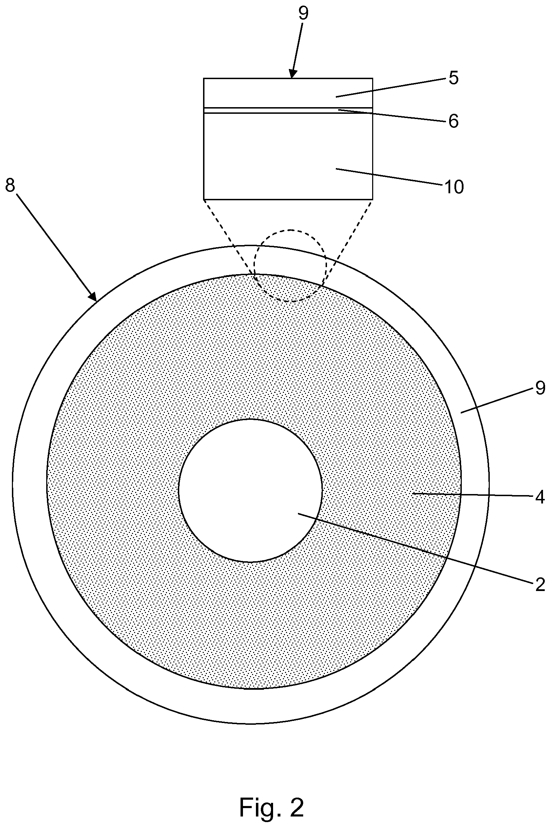

Bei einer in Figur 2 gezeigten Variante eines Leitungsrohres 8 ist ein Kunststoffaußenrohr 9 ebenfalls als ein Mehrschichtrohr mit einer äußeren Schicht 5 aus Polyethylen (PE-HD), einer Haftvermittlerschicht 6 und einer Gaspermeationssperrschicht 10 ausgeführt. Im Gegensatz zu der in der Figur 1 gezeigten Variante ist die Gaspermeationssperrschicht 10 durch einen geschlossenzelligen Schaum aus Polyethylenterephthalat (PET) mit einer Materialstärke von ca. 10 mm realisiert. Dadurch kann der geschlossenzellige Schaum der Gaspermeationssperrschicht 10 zusätzlich zu der Wärmedämmschicht 4 aus Polyurethan-Schaum ebenfalls eine thermisch bzw. mechanisch dämmende Funktion erfüllen.

### BEZUGSZEICHENLISTE

- 1: Leitungsrohr
- 2: Innenrohr
- 3: Kunststoffaußenrohr
- 4: Wärmedämmschicht
- 5: Schicht

- 6: Haftvermittlerschicht
- 7: Gaspermeationssperrschicht
- 8: Leitungsrohr
- 9: Kunststoffaußenrohr
- 10: Gaspermeationssperrschicht

## Patentansprüche

1. Doppelwandiges Leitungsrohr (1, 8) mit einem medienführenden Innenrohr (2), einem Kunststoffaußenrohr (3, 9) und einer Gaspermeationssperrschicht (7, 10), wobei in einem Ringspalt zwischen dem Innenrohr (2) und dem Kunststoffaußenrohr (3, 9) eine Wärmedämmschicht (4) angeordnet ist und wobei das Kunststoffaußenrohr (3, 9) als einen wesentlichen Materialanteil Polyethylen (PE) aufweist, wobei die Gaspermeationssperrschicht (7, 10) als einen wesentlichen Materialanteil Polyethylenterephthalat (PET) aufweist, **dadurch gekennzeichnet, dass** das Kunststoffaußenrohr (3) als ein Mehrschichtrohr mit der Gaspermeationssperrschicht (7) aus einer kompakten extrudierten Polyethylenterephthalat-Schicht mit einer Materialstärke von 0,8 mm bis 2 mm, insbesondere von 0,8 mm bis 1 mm, ausgeführt ist oder dass das Kunststoffaußenrohr (3) als ein Mehrschichtrohr mit der Gaspermeationssperrschicht (10) ausgeführt ist, die einen geschlossenzelligen Schaum aus Polyethylenterephthalat (PET) mit einer Materialstärke zwischen 10 mm und 100 mm aufweist.

2. Leitungsrohr (1, 8) nach Anspruch 1, **dadurch gekennzeichnet, dass** die Gaspermeationssperrschicht (7, 10) mit dem Kunststoffaußenrohr (3, 9) mittels zumindest einer Haftvermittlerschicht (6) zu einer Einheit verbunden ist.

3. Leitungsrohr (1, 8) nach den Ansprüchen 1 oder 2, **dadurch gekennzeichnet, dass** die Gaspermeationssperrschicht (7, 10) an einer dem Innenrohr (2) zugewandten Innenseite des Kunststoffaußenrohres (3, 9) angeordnet ist.

4. Leitungsrohr (1, 8) nach zumindest einem der vorhergehenden Ansprüche, **dadurch gekennzeichnet, dass** die Wärmedämmschicht (4) aus Polyurethan-Schaum (PUR) besteht.

5. Leitungsrohr (1, 8) nach zumindest einem der vorhergehenden Ansprüche, **dadurch gekennzeichnet, dass** die die Wärmedämmschicht (4) bildenden Komponenten in dem Ringspalt zu einem geschlossenzelligen Schaum aufschäumbar sind.

6. Leitungsrohr (1, 8) nach zumindest einem der vorhergehenden Ansprüche, **dadurch gekennzeichnet, dass** das Kunststoffaußenrohr (3, 9) zumindest eine äußere Schicht (5) aus Polyethylen (PE-HD) mit einer Dichte > 0,94 g/cm³ aufweist.

7. Leitungsrohr (1, 8) nach zumindest einem der vorhergehenden Ansprüche, **dadurch gekennzeichnet, dass** das Leitungsrohr (1, 8) einen Durchmesser zwischen 75 mm und 1.200 mm aufweist

## Claims

1. Double-walled line pipe (1, 8) with a fluid-conveying internal pipe (2), an external plastics pipe (3, 9) and a gas-permeation-barrier layer (7, 10), where there is a thermal insulation layer (4) arranged in an annular gap between the internal pipe (2) and the external plastics pipe (3, 9), and where the external plastics pipe (3, 9) comprises polyethylene (PE) as a substantive component of its material, where the gas-permeation-barrier layer (7, 10) comprises polyethylene terephthalate (PET) as a substantive component of its material, **characterized in that** the external plastics pipe (3) is configured as a multilayer pipe while the gas-permeation-barrier layer (7) is made of a compact extruded polyethylene terephthalate layer with thickness from 0.8 mm to 2 mm, in particular from 0.8 mm to 1 mm, or **in that** the external plastics pipe (3) is configured as a multilayer pipe while the gas-permeation-barrier layer (10) comprises a closed-cell foam made of polyethylene terephthalate (PET) with thickness from 10 mm to 100 mm.

2. Line pipe (1, 8) according to Claim 1, **characterized in that** the gas-permeation-barrier layer (7, 10) has been bonded to the external plastics pipe (3, 9) by means of at least one adhesion-promoter layer (6) to give a single unit.

3. Line pipe (1, 8) according to Claim 1 or 2, **characterized in that** the gas-permeation-barrier layer (7, 10) is arranged on an internal side of the external plastics pipe (3, 9), this being the side facing towards the internal pipe (2).

4. Line pipe (1, 8) according to at least one of the preceding claims, **characterized in that** the thermal insulation layer (4) consists of polyurethane foam (PUR).

5. Line pipe (1, 8) according to at least one of the preceding claims, **characterized in that** the components forming the thermal insulation layer (4) can be foamed in the annular gap to give a closed-cell foam.

6. Line pipe (1, 8) according to at least one of the preceding claims, **characterized in that** the external plastics pipe (3, 9) comprises at least one exterior layer (5) made of polyethylene (HDPE) with density > 0.94 g/cm³.

7. Line pipe (1, 8) according to at least one of the preceding claims, **characterized in that** the diameter of the line pipe (1, 8) is from 75 mm to 1200 mm.

## Revendications

1. Conduite à double paroi (1, 8) présentant un tuyau interne (2) guidant un milieu, un tuyau externe en matériau synthétique (3, 9) et une couche de blocage de la perméation gazeuse (7, 10), une couche d'isolation thermique (4) étant disposée dans une fente annulaire entre le tuyau interne (2) et le tuyau externe en matériau synthétique (3, 9) et le tuyau externe en matériau synthétique (3, 9) présentant, comme proportion matérielle essentielle, du polyéthylène (PE), la couche de blocage de la perméation gazeuse (7, 10) présentant, comme proportion matérielle essentielle, du poly(téréphtalate d'éthylène) (PET), **caractérisée en ce que** le tuyau externe en matériau synthétique (3) est réalisé sous forme d'un tuyau multicouche présentant la couche de blocage de la perméation gazeuse (7) constituée par une couche compacte extrudée de poly(téréphtalate d'éthylène) d'une épaisseur de matériau de 0,8 mm à 2 mm, en particulier de 0,8 mm à 1 mm ou **en ce que** le tuyau externe en matériau synthétique (3) est réalisé sous forme d'un tuyau multicouche présentant la couche de blocage de la perméation gazeuse (10) qui présente une mousse à cellules fermées en poly(téréphtalate d'éthylène) (PET) d'une épaisseur de matériau entre 10 mm et 100 mm.

2. Conduite (1, 8) selon la revendication 1, **caractérisée en ce que** la couche de blocage de la perméation gazeuse (7, 10) est assemblée en une unité avec le tuyau externe en matériau synthétique (3, 9) au moyen d'au moins une couche de promoteur d'adhérence (6).

3. Conduite (1, 8) selon les revendications 1 ou 2, **caractérisée en ce que** la couche de blocage de la perméation gazeuse (7, 10) est disposée sur un côté interne, orienté vers le tuyau interne (2), du tuyau externe en matériau synthétique (3, 9).

4. Conduite (1, 8) selon au moins l'une quelconque des revendications précédentes, **caractérisée en ce que** la couche d'isolation thermique (4) est constituée par une mousse de polyuréthane (PUR).

5. Conduite (1, 8) selon au moins l'une quelconque des revendications précédentes, **caractérisée en ce que** les composants formant la couche d'isolation thermique (4) sont moussables dans la fente annulaire en une mousse à cellules fermées.

6. Conduite (1, 8) selon au moins l'une quelconque des revendications précédentes, **caractérisée en ce que** le tuyau externe en matériau synthétique (3, 9) présente au moins une couche externe (5) en polyéthylène (PE-HD) d'une densité > 0,94 g/cm³.

7. Conduite (1, 8) selon au moins l'une quelconque des revendications précédentes, **caractérisée en ce que** la conduite (1, 8) présente un diamètre entre 75 mm et 1200 mm.
